(19)

Europäisches
Patentamt

European
Patent Office

Office européen
des brevets

(11)  EP 2 927 810 A1

(12)  EUROPEAN PATENT APPLICATION

(43) Date of publication:
07.10.2015 Bulletin 2015/41

(51) Int Cl.:
*G06F 9/455* (2006.01)     *G06F 9/50* (2006.01)

(21) Application number: 14360008.8

(22) Date of filing: 31.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventors:
• Cherubini, Davide
Dublin (IE)

• Jul, Eric
Dublin (IE)
• Lugones, Diego
Dublin (IE)

(74) Representative: Greenwood, Matthew David et al
Bryers LLP
7 Gay Street
Bath BA1 2PH (GB)

(54)  **Low latency virtual machine enablement**

(57)     A method for low latency virtual machine enablement in a virtualised system, comprising instantiating
a virtual machine using a hypervisor of the system executing on physical computing hardware, loading a set of
base modules common to multiple applications or application parts in program execution on the system into the
virtual machine whereby to create a spare virtual machine for the application or part, enabling the spare virtual
machine in order to provide an application instance for
the system by selecting an application specific module
for use with the spare virtual machine.

FIG. 2

## Description

TECHNICAL FIELD.

The present invention relates to virtual machine enablement in a virtualised system, and more particularly, although not exclusively to low latency virtual machine enablement.

BACKGROUND

In scalable computing environments, such as cloud data centers, which are also known as virtualized systems, applications can be executed in execution environments such as virtual machines that are executed on or over or using physical hardware. Multiple virtual machine instances can be provided, each running the same or different applications or application parts, and the environment can scale the number of virtual machines that are running in order to cope with demand from users for the applications in question.

For example, for a given application, the number of virtual machine instances executing the application can typically be expanded dynamically and elastically so that when load increases another virtual machine instance to service the additional load can be instantiated or spawned. This is called horizontal scalability in that it, virtually, corresponds to adding new machines next to the ones already servicing the load, i.e., expanding horizontally. An application executing in a virtualized system can be composed of multiple parts, each part executing in its own virtual machine.

It typically takes of the order minutes to start up a new virtual machine instance from scratch, and then to load the necessary program modules for an application into it, and thereafter start executing, which can be too long where an increase in load is to be accommodated.

SUMMARY

According to an example, there is provided a method for low latency virtual machine enablement in a virtualised system, comprising instantiating a virtual machine using a hypervisor of the system executing on physical computing hardware, loading a set of base modules common to multiple applications or application parts in program execution on the system into the virtual machine whereby to create a spare virtual machine for the application or part, enabling the spare virtual machine in order to provide an application instance for the system by selecting an application specific module for use with the spare virtual machine. Selecting an application specific module for use with the spare virtual machine can include loading the application specific module into the spare virtual machine from a storage device of or associated with the system in order to provide the application instance. The method can further include loading multiple application specific modules into the virtual machine, and enabling the spare virtual machine can include removing all application specific modules except the selected module. Selected base modules can be removed from the spare virtual machine to provide the application instance. Removal can include deletion from a virtual machine image for example. The application instance provided by the spare virtual machine can be one of multiple parts of an application, each in program execution on the system in respective virtual machines. That is, for example, an application can be composed of multiple application parts that can be spread over multiple virtual machines. The spare virtual machine can be enabled in response to an increase in load in the system. In an example, the virtual machine or spare virtual machine is an execution environment in the form of a container for the system.

According to an example, there is provided a system including a hypervisor to support multiple virtual machines in program execution on physical computing hardware, respective virtual machines to execute multiple applications or application parts, the system including a spare virtual machine instantiated using the hypervisor and including a set of base modules common to at least some of the applications or application parts, wherein the system is operable to enable the spare virtual machine in order to provide an application instance for the system by selecting an application specific module for use with the spare virtual machine. The system can be a scalable cloud based data centre for example. The system can be operable to select an application specific module for use with the spare virtual machine by loading the application specific module into the spare virtual machine from a storage device of or associated with the system in order to provide the application instance. The system can be operable to load multiple application specific modules into the virtual machine, and enable the spare virtual machine by removing all application specific modules except the selected module. Selected base modules can be removed from the spare virtual machine to provide the application instance. The application instance with selected application specific modules can be active before modules are removed. That is, for example, modules that are not needed for the application instance can be removed after the virtual machine is enabled, thereby further reducing latency. The system can be operable to enable the spare virtual machine in response to an increase in load in the system. The system can be operable to enable the spare virtual machine to provide additional functionality for the system in the form of the application instance. In an example, a virtual machine or spare virtual machine can be an execution environment in the form of a container for the system, such as an isolated container.

According to an example, there is provided a computer program product, comprising a computer usable medium having computer readable program code embodied therein, said computer readable program code adapted to be executed to implement a method for low latency virtual machine enablement in a virtualised system as provided herein.

BRIEF DESCRIPTION OF THE DRAWINGS

Embodiments will now be described, by way of example only, with reference to the accompanying drawings, in which:

Figure 1 is a schematic representation of a virtualized system in which multiple virtual machine instances are provided to execute four parts of an application, wherein each part has an associated sVM;

Figure 2 is a schematic representation of a virtualized system according to an example;

Figure 3 is a further schematic representation of a virtualized system according to an example; and

Figures 4a-c are further schematic representations of a virtualized system according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, a method and system are provided for reducing the latency associated with the instantiation, spawning or enabling of a virtual machine instance in a virtualized system when, for example, load increases and until the new virtual machine instance is fully initialized and ready to service the increased load or provide additional functionality for the system.

In an example, a virtualized system can be a cloud computing system such as a cloud-based data centre for example, in which multiple virtual machine instances are executing over physical hardware resources of the system by way of a hypervisor or virtual machine monitor (VMM). That is, a hypervisor can instantiate and execute multiple virtual machine instances, and is operable to present operating systems of the virtual machine instances with a virtual operating platform and to manage the execution of the guest operating systems. Multiple instances of a number of potentially different operating systems can share the virtualized hardware resources of the system.

A virtual machine instantiated in a virtualized system can execute an application or part of an application. For example, for an application consisting of N parts, N virtual machine instances can be provided in the system in order to execute the application. Any one or more of the virtual machine instances can be horizontally scaled to provide an additional instance executing the same part of the application. In order to enable dynamic and timely scaling, a spare Virtual Machine (sVM) can typically be provided for each part of an application that can be spawned and preloaded with all of the necessary software modules to execute the application part.

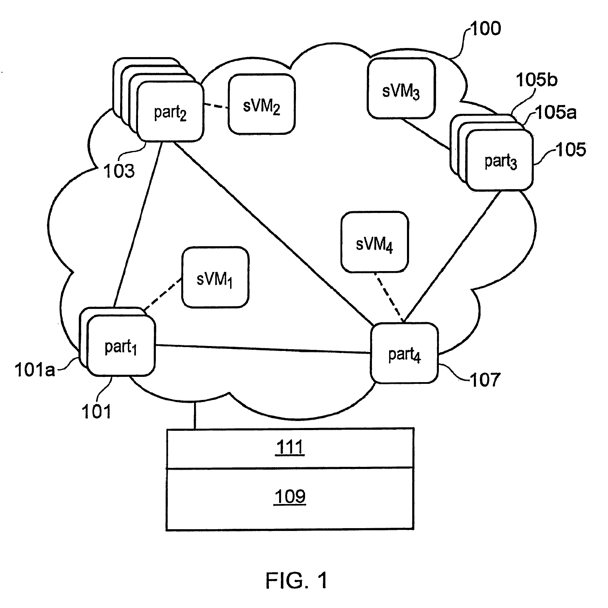

For example, figure 1 is a schematic representation of a virtualized system in which multiple virtual machine instances are provided to execute four parts of an application, wherein each part has an associated sVM. Each part can have one or more VMs executing for that part, and one sVM is configured with its required modules for each part such that, in the presence of an increased load, the sVM can promptly be enabled to service the additional load for the part in question, thereby resulting in horizontal scaling of the part in question.

Thus, in the example of figure 1, in a virtualised system 100, an application consists of four parts, $part_1$-$part_4$, 101, 103, 105, 107, each comprising one or more virtual machine instances executing over physical hardware resources 109 for the system 100. A hypervisor 111 is operable to instantiate the virtual machines and control the allocation of resources 109 for example. In the example of figure 1, $part_3$ of the application is being executed by three virtual machine instances, 105, 105a, 105b. Similarly, $part_1$ is being executed by two virtual machine instances, 101, 101a, and so on.

For each part of the application an associated

sVM is provided, $sVM_1$, $sVM_2$, $sVM_3$ and $sVM_4$. Each sVM is configured with the required modules for each application part so that, in the presence of an increased load, the sVM in question can promptly be enabled to service the additional load for the part in question. This requires an sVM for each of the application parts however, and thus comes at a high cost, as there is a cost associated for each of these sVMs.

According to an example, a method for low latency virtual machine enablement in a virtualised system comprises instantiating a virtual machine using a hypervisor of the system executing on physical computing hardware and loading a set of base modules common to multiple applications or application parts in program execution on the system into the virtual machine whereby to create an sVM for the system, and enabling the sVM in order to provide an application instance for the system by selecting an application specific module for use with the spare virtual machine. That is, a partially initialized sVM is provided that can quickly be configured and enabled so as to run any one of N parts of an application, or that can be enabled to provide additional functionality for the system, such as functionality deriving from an application that is not currently executing for example. For an application consisting of multiple parts each executing within its own virtual machine, a set of modules common to the parts can be loaded to the sVM. Accordingly, irrespective of which application part may need to be scaled, the common base modules for all applications are already present in the sVM, so that the time taken to enable an additional application instance for the part in question is reduced since the common modules are already present. All that is needed in order to enable the sVM into an application instance is to select the or each specific module for the application part in question as is described below. The selection of specific module is described in more detail below. Either multiple specific modules can be provided in the sVM, such that one or more for a desired application instance can be selected when required, or a specific modules(s) can be loaded to the sVM from outside of the sVM when needed. That is, in either case, one or more specific modules are selected - in one example, the modules are within the sVM image and can be selected, and in another example, they are loaded to the sVM once selected.

Thus, latency in enabling an additional application instance is significantly reduced compared to the case where a new instance is instantiated from scratch, such as in response in to an increase in load. Furthermore, costs are reduced since a specific sVM for each application part that may be present 'just in case' there is a load increase for that part is not required.

Most applications that are split into parts each running in a virtual machine have multiple basic software modules in common; a common base. In addition, each part will have a number of other modules that are more specific to its purpose (identities). When instantiating a virtual machine for an application part, both the common base modules and the specific modules must be loaded into the virtual machine image, and in some cases these modules must be downloaded from external locations.

Both the loading and downloading operations take time and can cause significant and/or unpredictable delay in enabling the virtual machine. According to an example, an sVM is provided for all parts of an application. That is, an sVM is provided for an application.

When the sVM is to be activated or enabled as an application instance for an application or application part due to, for example, load increase for one of the application parts, the sVM is dynamically reconfigured to become a specific virtual machine instance for that part. That is, it obtains an identity and becomes an application instance. The sVM for the virtualized system is instantiated at application startup, or at some other predefined time following or before application startup, and is loaded with a set of base modules that are common to all or a subset of multiple applications in program execution on the system as noted above. The sVM can then be enabled in order to provide a specific application instance for the system by selecting an application specific module for use with the sVM. For example, in the case that multiple applications or application parts are executing in respective multiple virtual machines of a system, a set of base modules common to all applications or parts can be preloaded into an sVM. For a single application executing as multiple parts across multiple virtual machines, a set of base modules common to all parts of the application can be preloaded into a sVM. The sVM is therefore operable as a potential additional application instance for any of the parts.

In an example, one or more or all application specific modules required by the multiple parts of an application or applications in order for a virtual machine to function as an application instance for the part can be preloaded or dynamically provided to the sVM so that, when one of the parts requires another virtual machine instance, the sVM can be either dynamically updated with the required module or modules for the part and thus enabled as an application instance for the execution of the application part, or, in the case that all specific modules for all parts are preloaded, can discard the non-required modules and be enabled as an application instance for the application part. The sVM can be enabled as an application instance for the application part before the non-required specific modules are discarded, thereby further reducing latency for the scaling of the application part.

Thus, the required specific module or modules for a virtual machine instance for an application part can be loaded to the sVM in order to provide the specific instance. Modules that are not required by the specific instance can be discarded. In an example, there may also be some common base modules that are actually not required for the specific virtual machine instance in question.

For example, if all modules are provided in an sVM, modules that are not required for a particular part can be discarded and the virtual machine application instance for the part in question can then be enabled from the sVM. Thus, according to an example, an sVM is instantiated, configured as a common instance for multiple applications or application parts in program execution in a virtualised system, and subsequently enabled or activated as a specific application instance, such as in response to an increase in the load for an application part for example.

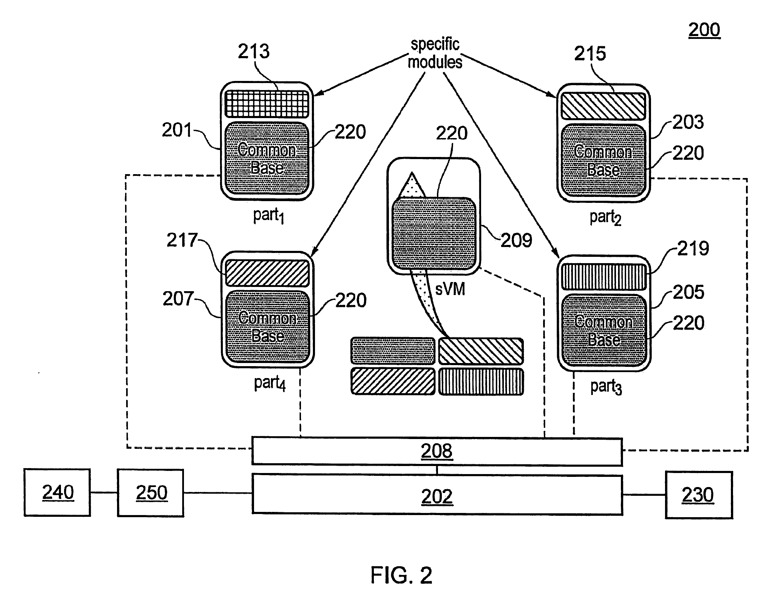

Figure 2 is a schematic representation of a virtualized system according to an example. In the example of figure 2, a virtualized system 200 includes four application part instances of an application, 201, 203, 205, 207, and a sVM 209. The application part instances and the sVM are instantiated using a hypervisor 208 executing over physical hardware 202 as is typical.

Each application part has a set of common base modules 220. That is, a set of application modules that are common to all of the application parts 201, 203, 205, 207. The sVM is therefore instantiated with the same common base modules 220. Each part 201, 203, 205, 207 includes one or more specific modules, 213, 215, 217, 219. An application instance for a part of the application executes a combination of common base modules 220 and a specific module 213, 215, 217, 219.

In an example, the sVM 209 can be enabled as an application instance for a part of the application that requires scaling by dynamically loading the relevant module or modules in order to enable the sVM as a virtual machine executing the application part. For example, with reference to figure 2, one of the specific modules, which can be pre-cached locally, if it is to be downloaded from an external site for example, can be loaded to the sVM, which already has the common base modules 220 loaded, thereby enabling the sVM as a specific application instance for the part in question. Accordingly, in an example, one or more specific modules are loaded to sVM 209 in response to a load change, for example, for an external source. The external source can be a network attached storage device (NAS) or other such suitable storage device 230 for example. Alternatively, the or each specific module can be provided from a remote location 240 accessible to the system 200 using a network 250 such as the internet for example.

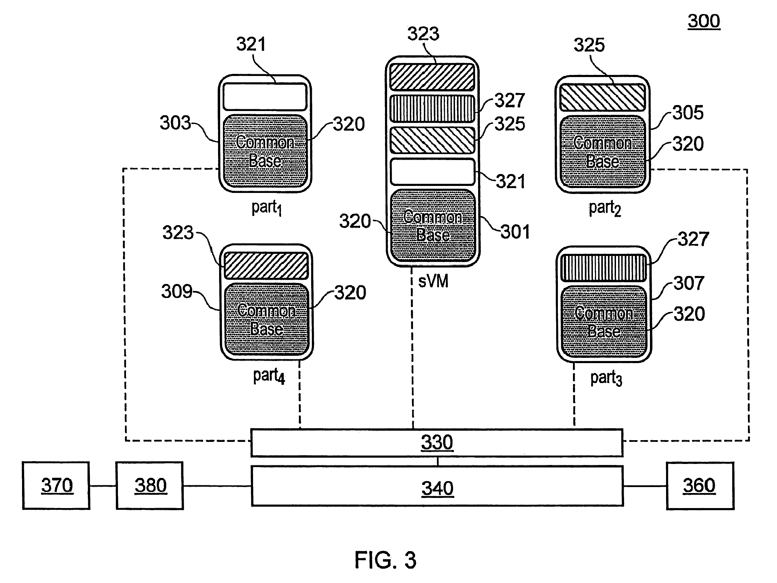

Figure 3 is a schematic representation of a virtualized system according to an example. In the case depicted in figure 3, the sVM 301 is, as with the example of figure 2, preloaded with the common base modules 320 common to parts of an application in execution in the virtualized system 300 using for example a hypervisor 330 executing over physical hardware 340. The sVM 301 is also loaded with all specific modules 321, 323, 325, 327 required by any of the parts, 303, 305, 307, 309. That is, the entire software base is loaded to sVM 301, so that in order to enable the sVM 301 as an application instance to scale an application part, the modules that are not required by the part are unloaded. In an alternative example, it possible to have an sVM preloaded with a common base and some of the other specific modules. When activated, the missing modules for an application part can be loaded while any superfluous ones are unloaded. Missing modules can be loaded to sVM 301 from, for example, for an external source. The external source can be a network attached storage device (NAS) or other such suitable storage device 360 for example. Alternatively, the or each missing module can be provided from a remote location 370 accessible to the system 300 using a network 380 such as the internet for example.

For a given application, it may be the case that there are application parts requiring low latency and so some or all modules for such parts can be preloaded to an sVM, while application parts that do not require low latency, or parts that rarely required horizontal scaling, can be left out and dynamically loaded for example.

Note that if load increases rapidly, it may be necessary to have several sVMs ready to achieve low latency. If there exists some knowledge of which of the parts are most likely to need an sVM, one sVM can be loaded with the common base modules only and another sVM with the common base and the application part specific modules for the most likely part for example. Alternatively, several sVMs can be preloaded with various sets of modules depending on knowledge of uihich are most likely to be activated or are most likely to require low latency when activated.

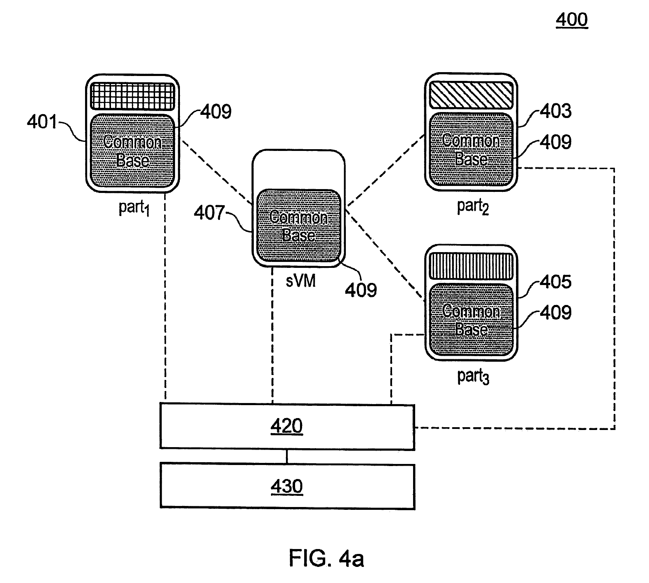

Figures 4a-c are schematic representations of a virtualized system according to an example. As shown in figure 4a, the system 400 is executing an application that consists of three parts, 401, 403, 405 in program execution in respective virtual machines and has an sVM 407 for these parts preloaded with common base modules 409. As with the systems of figures 2 and 3, the virtual machines and sVM can be executed using a hypervisor 420 over physical hardware 430.

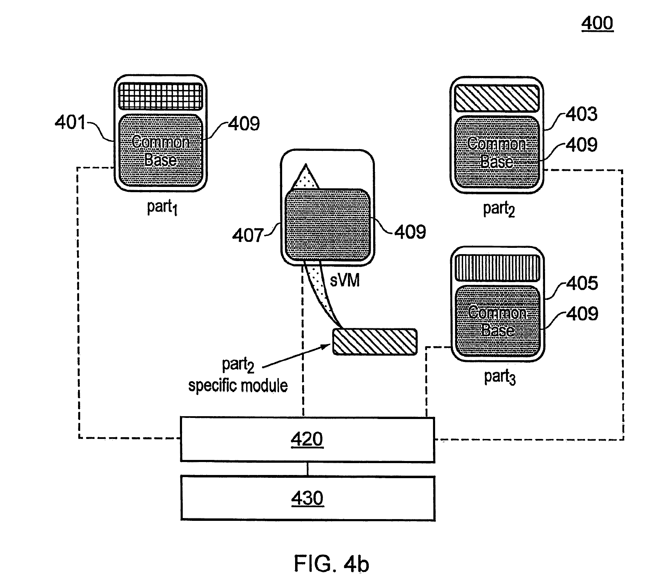

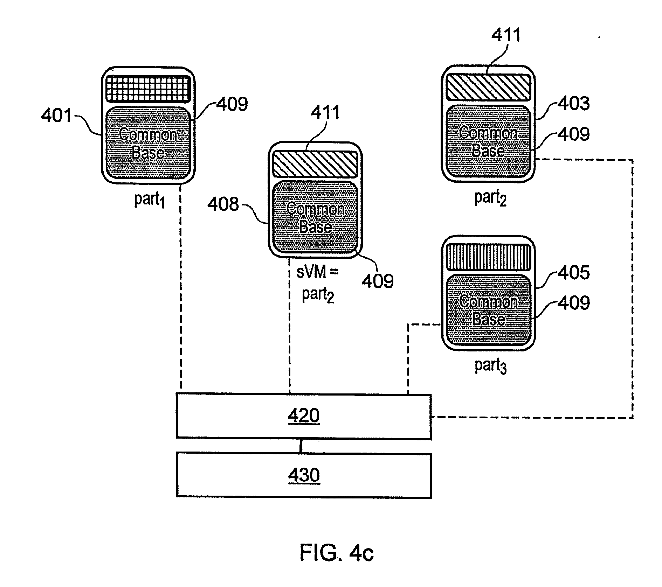

One of the parts 401, 403, 405 of the application might need to be quickly scaled. For example, with reference to figure 4b, the specific module characterizing $part_2$, 403, can be dynamically and quickly loaded onto the sVM 407 making it a de-facto new $part_2$ instance, as shown in figure 4c, which can be used to scale out the application.

Thus, sVM 408 as depicted in figure 4c has been enabled as an application instance for $part_2$ of the application in question by selecting the specific module 411 for $part_2$ (403) and loading the selected module to sVM 407. The specific module 411 can be pre-cached locally or provided from a network attached storage device, which may be physically remote, as described above with reference to figures 2 and 3 for example. That is, the specific module 411 can be loaded to sVM 407 from, for example, for an external source. The external source can be a network attached storage device (NAS) or other such suitable storage device 460 for example. Alternatively, the module can be provided from a remote location 470 accessible to the system 400 using a network 480 such as the internet for example.

With reference to figures 4a-c, on initialization of an application, virtual machines for the three parts 401, 403, 405 are instantiated and initialized as shown in figure 4a. An sVM 407 is instantiated and initialized with base modules common to the application parts.

If, for example, it becomes necessary to scale up the part₂ (403) instance, the following process can be followed according to an example:

1. Dynamically load the part₂ (403) specific module into the sVM 407, as shown in figure 4b.

2. Rename the sVM 407 as a new part₂ (403) instance 408.

3. Start the new part₂ instance, see figure 4c.

4. Instantiate a new virtual machine.

5. Load the base modules common to the application parts into it.

6. Rename the new virtual machine to become the new (replacement) sVM, which is now ready to repeat the scale up method.

Should the load on the part₂ instances later become smaller and fulfill the requirements for scaling down, the following method can be employed:

1. Stop further requests for the latest (or any one) part₂ instance; any new requests are routed to one of the remaining part₂ instances (there may be one only).

2. When the latest part₂ instance at some point becomes idle because it has completed all requests, stop the virtual machine running it.

3. Discard the stopped virtual machine.

Thus, when an sVM is required to "become" an application part, a brand new sVM can be created (either preloaded with the common base only or with all the specific modules as aforementioned).

In other possible use cases, systems and methods described herein can also be used to quickly:

- improve the performance of an existing application (part update)

- recover from a failure or abnormal operation

- install a brand new application part parts that includes new features or functionalities (system upgrade)

If the time, T$_{scaleup}$, it takes to scale up a part is longer than the time, T$_{saturation}$ it takes for enough requests to arrive so as to saturate a new virtual machine, it can be necessary to have more than one sVM. For example, at least N sVMs computed as the rounded up

value of $\dfrac{T_{SATURATION}}{T_{SCALEUP}}$ can be provided.

As used herein, the term virtual machine is not intended to be limiting. For example, a virtual machine can be in the form of an execution environment in the form of a container, or by way OS-level virtualization for example. That is, different isolated containers, or namespaces, or execution environments, residing in the same OS, but sufficiently isolated so that they are essentially executing in an exclusive OS environment can be used. Enablement of a virtual machine includes making the virtual machine operational or activating the virtual machine, so that the application or application part that it is operable to execute goes 'live'. A spare virtual machine can therefore be instantiated, and the spare virtual machine can be enabled once it has been given an identity. That is, once the specific modules for an application or application part have been selected.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for low latency virtual machine enablement in a virtualised system, comprising:

instantiating a virtual machine using a hypervisor of the system executing on physical computing hardware;
loading a set of base modules common to multiple applications or application parts in program execution on the system into the virtual machine whereby to create a spare virtual machine for the application or part;
enabling the spare virtual machine in order to provide an application instance for the system by selecting an application specific module for use with the spare virtual machine.

2. A method as claimed in claim 1, wherein selecting an application specific module for use with the spare virtual machine includes:

loading the application specific module into the spare virtual machine from a storage device of or associated with the system in order to provide the application instance.

3. A method as claimed in claim 1, further including:

loading multiple application specific modules into the virtual machine; and wherein enabling the spare virtual machine includes removing all application specific modules except the selected module.

4. A method as claimed in claim 2 or 3, further including:

removing selected base modules from the spare virtual machine to provide the application instance.

5. A method as claimed in any preceding claim, wherein the application instance provided by the spare virtual machine is one of multiple parts of an application, each in program execution on the system in respective virtual machines.

6. A method as claimed in any preceding claim, wherein the spare virtual machine is enabled in response to an increase in load in the system.

7. A method as claimed in any preceding claim, wherein the virtual machine or spare virtual machine is an execution environment in the form of a container for the system.

8. A system including a hypervisor to support multiple virtual machines in program execution on physical computing hardware, respective virtual machines to execute multiple applications or application parts, the system including:

a spare virtual machine instantiated using the hypervisor and including a set of base modules common to at least some of the applications or application parts, wherein the system is operable to enable the spare virtual machine in order to provide an application instance for the system by selecting an application specific module for use with the spare virtual machine.

9. A system as claimed in claim 8, wherein the system is operable to select an application specific module for use with the spare virtual machine by loading the application specific module into the spare virtual machine from a storage device of or associated with the system in order to provide the application instance.

10. A system as claimed in claim 8, wherein the system is operable to load multiple application specific modules into the virtual machine, and to enable the spare virtual machine by removing all application specific modules except the selected module.

11. A system as claimed in claim 9 or 10, further operable to remove selected base modules from the spare virtual machine to provide the application instance.

12. A system as claimed in any of claims 8 to 11, wherein the system is operable to enable the spare virtual machine in response to an increase in load in the system.

13. A system as claimed in any of claims 8 to 11, wherein the system is operable to enable the spare virtual machine to provide additional functionality for the system in the form of the application instance.

14. A system as claimed in any of claims 8 to 13, wherein a virtual machine or spare virtual machine is an execution environment in the form of a container for the system.

15. A computer program product, comprising a computer usable medium having computer readable program code embodied therein, said computer readable program code adapted to be executed to implement a method for low latency virtual machine enablement in a virtualised system as claimed in any of claims 1 to 7.

FIG. 1

FIG. 2

EP 2 927 810 A1

FIG. 3

EP 2 927 810 A1

FIG. 4a

EP 2 927 810 A1

EP 2 927 810 A1

400

401 —

409

Common Base

part₁

403

409

Common Base

part₂

407 —

409

sVM

part₂
specific module

405

409

Common Base

part₃

420

430

FIG. 4b

FIG. 4c

Europäisches
Patentamt

European
Patent Office

Office européen
des brevets

# EUROPEAN SEARCH REPORT

Application Number

EP 14 36 0008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/029970 A1 (ARASARATNAM OMKHARAN [CA]) 3 February 2011 (2011-02-03) * paragraph [0011] - paragraph [0022]; figure 1 * * paragraph [0023] - paragraph [0032]; figure 2 * ----- | 1-15 | INV. G06F9/455 G06F9/50 |

TECHNICAL FIELDS
SEARCHED     (IPC)

G06F

The present search report has been drawn up for all claims

| Place of search | Date of completion of the search | Examiner |
|---|---|---|
| Munich | 30 September 2014 | Gafita, Cristinel |

EPO FORM 1503 03.82 (P04C01)

## ANNEX TO THE EUROPEAN SEARCH REPORT
## ON EUROPEAN PATENT APPLICATION NO.

EP 14 36 0008

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2014

| Patent document cited in search report | Publication date | Patent family member(s) | Publication date |
|---|---|---|---|
| US 2011029970 A1 | 03-02-2011 | CA 2674402 A1<br>US 2011029970 A1<br>US 2013007744 A1 | 31-01-2011<br>03-02-2011<br>03-01-2013 |

EPO FORM P0459

For more details about this annex : see Official Journal of the European Patent Office, No. 12/82